# EUROPEAN PATENT SPECIFICATION

(11) **EP 2 582 932 B1**
(45) Date of publication and mention of the grant of the patent: **30.08.2017**
(21) Application number: 11798459.1
(22) Date of filing: 20.06.2011
(51) Int. Cl.: F01N 3/025, F01N 3/36, F01N 9/00, F01N 11/00, F01N 3/20

(54) **METHOD AND DEVICE PERTAINING TO COOLING OF DOSING UNITS OF HC DOSING SYSTEMS FOR EXHAUST CLEANING**
VERFAHREN UND VORRICHTUNG ZUR KÜHLUNG VON DOSIEREINHEITEN VON HC-DOSIERSYSTEMEN ZUR ABGASREINIGUNG
PROCÉDÉ ET DISPOSITIF DE REFROIDISSEMENT D'UNITÉS DE DOSAGE DE SYSTÈMES DE DOSAGE D'HYDROCARBURES (HC) POUR LA PURIFICATION DE GAZ D'ÉCHAPPEMENT

(30) Priority: 21.06.2010 SE 1050643
(43) Date of publication of application: 24.04.2013
(73) Proprietor: Scania CV AB, 151 87 Södertälje (SE)
(72) Inventor: LILJESTRAND, Andreas, S-151 45 Södertälje (SE); BREMBERG, Per, S-151 60 Södertälje (SE); CARLSSON, Ulf, S-152 30 Södertälje (SE); ERIKSSON, Lars, S-153 38 Järna (SE)
(74) Representative: Scania CV AB
(86) International application number: PCT/SE2011/050785
(87) International publication number: WO 2011/162689

(56) References cited:
- WO-A2-2009/053806
- DE-A1-102007 000 666
- DE-A1-102007 000 666
- US-A- 5 606 856
- US-A- 5 606 856
- US-A1- 2008 245 058

## Description

### TECHNICAL FIELD

The present invention relates to the method for cooling a dosing unit pertaining to an HC dosing system for exhaust cleaning which comprises a dosing unit for fuel and a feed device for said fuel. The invention relates also to a computer programme product which contains programme code for a computer for implementing a method according to the invention. The invention relates also to an HC dosing system for exhaust cleaning and a motor vehicle which is equipped with the HC dosing system.

### BACKGROUND

In vehicles today, diesel fuel is used as fuel in DPF (diesel particulate filter) systems which comprise a particle filter. The particle filter is adapted to capturing, for example, diesel particles and soot. During active regeneration of the particle filter, diesel fuel is supplied to an exhaust pipe downstream of an engine and is led into an oxidation catalyst, also called DOC. In the oxidation catalyst, said diesel fuel is burnt and causes a rise in the temperature of the exhaust system. Active regeneration of the particle filter situated downstream of the oxidation catalyst can thus be effected. The document WO2009/053806A2 discloses such a DPF system in which the fuel injector is cooled by the fuel flow according to the cooling needs. One type of DPF system comprises a container for diesel fuel. The DPF system may also have a pump adapted to drawing said diesel fuel from the container via a suction hose and to supplying it via a pressure hose to a dosing unit situated adjacent to an exhaust system of the vehicle, e.g. adjacent to an exhaust pipe of the exhaust system. The dosing unit is adapted to injecting a necessary amount of diesel fuel into the exhaust pipe upstream of the particle filter according to operating routines stored in a control unit of the vehicle. To make it easier to regulate the pressure when no or only small amounts are being dosed, the system also comprises a return hose which runs back from a pressure side of the system to the container. This configuration makes it possible to cool the dosing unit by means of said diesel fuel which, during cooling, flows from the container via the pump and the dosing unit and back to the container. This results in active cooling of the dosing unit. The return flow from the dosing valve to the container is currently substantially constant.

As the dosing unit is currently situated adjacent to the vehicle's exhaust system which becomes warm during operation of the vehicle, e.g. depending on the engine's load, there is risk of the dosing valve becoming overheated. Overheating of the dosing unit may entail degradation of its functionality, potentially impairing its performance.

The dosing unit currently comprises electrical components, certain of them being provided with a circuit card. Said circuit card may for example be adapted to controlling the dosing of diesel fuel to the vehicle's exhaust system. For various reasons, these electrical components are sensitive to high temperatures. Too high temperatures of the dosing unit may result in degradation of the electrical components, potentially leading to expensive repairs at a service workshop. Moreover, diesel fuel present in the dosing unit may at least partly convert to solid form at too high temperatures, potentially leading to obstruction of the dosing unit. According to an example, said diesel fuel undergoes pyrolysis in the dosing unit and is thereby at least partly converted to coke. Thus at least part of said diesel fuel may carbonise. It is therefore of the utmost importance that the temperature of the dosing unit of the DPF system should not exceed a critical level.

Cooling the dosing unit of a vehicle's DPF system currently takes place continuously during the vehicle's ordinary operation as a result of said diesel fuel circulating within the DPF system as indicated above. To some extent, cooling the dosing unit during operation of the vehicle currently works satisfactorily. There is however always a need to improve the performance of vehicles' existing subsystems, e.g. DPF systems, not least from a competition perspective.

During and after operation of the vehicle a large amount of thermal energy arising from its operation is stored in primarily the exhaust system. This thermal energy may be led to the dosing unit from, for example, a silencer and the particle filter and may warm the dosing unit to a temperature which exceeds a critical level. The document DE102007000666A1 discloses a method for cooling a reducing agent injector in the exhaust line after engine stop. When the vehicle is switched off and the exhaust flow in the exhaust system consequently ceases, the diesel fuel dosing unit is cooled for a predetermined time, e.g. about 30 minutes, by said diesel fuel in the same way as during ordinary operation.

This arrangement entails certain disadvantages. One is the relatively large amount of energy used to run the pump in the DPF system after the vehicle has been switched off. Any vehicle battery used to power the pump of the DPF system may thus be discharged or reach a relatively low charge level.

Another disadvantage of the dosing unit being cooled in the same way as during ordinary operation is that the pump of the DPF system emits disturbing noise which for example a driver of the vehicle may find irritating, particularly when he/she has to sleep in the cab after a driving run or is in the immediate vicinity of the vehicle.

There is thus a need to improve current methods for cooling the dosing unit in the DPF system after the vehicle has been switched off, in order to reduce or eliminate the above disadvantages.

### SUMMARY OF THE INVENTION

An object of the present invention is to propose a novel and advantageous method for improving the performance an HC (hydrocarbon) dosing system.

Another object of the present invention is to propose a novel and advantageous HC dosing system and a novel and advantageous computer programme for improving the performance of an HC dosing system.

Another object of the present invention is to propose a novel and advantageous method for effecting cooling of a dosing unit of an HC dosing system during operation or after cessation of an exhaust flow therein.

Another object of the invention is to propose a novel and advantageous HC dosing system and a novel and advantageous computer programme for effecting cooling of a dosing unit of an HC dosing system during operation or after cessation of an exhaust flow in the HC dosing system.

A further object is to propose a method, an HC dosing system and a computer programme for reducing the risk that a dosing unit in an HC dosing system might become overheated during operation or after cessation of an exhaust flow in the HC dosing system.

A further object is to propose an alternative method, an alternative HC dosing system and an alternative computer programme for reducing the risk that a dosing unit in an HC dosing system might become overheated during operation or after cessation of an exhaust flow in the HC dosing system.

These objects are achieved with a method for cooling a dosing unit pertaining to HC dosing systems for exhaust cleaning according to claim 1.

An aspect of the invention proposes a method for cooling a dosing unit pertaining to HC dosing systems for exhaust cleaning which comprise a dosing unit for fuel and a feed device for said fuel, comprising the step of cooling said fuel dosing unit by means of fuel supplied to the dosing unit. The method comprises also the step of running said feed device to supply said coolant fuel at reduced power compared with ordinary operation. Said feed device is thus run at reduced power compared with ordinary operation.

To minimise the impact on the vehicle, a function is proposed whereby the pump speed of the feed device of the HC dosing system is reduced when cooling of the dosing unit takes place during operation or after cessation of said exhaust flow. This reduced pump speed is lower or substantially lower than during ordinary operation of the HC dosing system, meaning operation of the HC dosing system when the vehicle is in motion, or earlier ordinary operation of the HC dosing system during cooling of the dosing unit after the cessation of said exhaust flow.

With advantage, a previous need for electrical energy from a battery of the vehicle when the vehicle's engine is off is reduced during the subsequent cooling procedure.

Reducing the operating power of the feed device, with substantially unchanged cooling power of the dosing unit, results in less noise than running the feed device at full power as previously. Part of the inventiveness of the present invention is that it has been found that the cooling power of the dosing unit is reduced only marginally when the operating power of the feed device is reduced.

Despite the operating power of the feed device being reduced, with substantially unchanged cooling power of the dosing unit, it is possible to avoid carbonisation of the fuel caused by too high temperatures, which would cause obstruction of the dosing unit and might thereby entail expensive repairs of the HC dosing system.

Despite the operating power of the feed device being reduced, with substantially unchanged cooling power of the dosing unit, temperature-related damage to the dosing unit's electrical components may with advantage be prevented.

Reducing the operating power of the feed device may entail running it at a lower speed than during ordinary operation. Reducing the power of the feed device may result in a lower pressure of the fuel towards the dosing unit than during ordinary operation.

According to an embodiment, the power of the fuel feed device is reduced in at least one stage to a level which results in substantially no change in the cooling power of the dosing unit but uses substantially less energy than in the state of the art.

The method may comprise the step of running said feed device at least possible power, with substantially unchanged cooling power of said dosing unit, for as long as cooling continues. With advantage, this results in a cooling function whereby the cooling power of said dosing unit is substantially unchanged but the impact of the HC dosing system is decreased in a desirable way.

The step of running said feed device may comprise running it at a power corresponding to 10-30% of that during ordinary operation. With advantage, this results in a substantial reduction in the amount of energy required for adequate cooling of the dosing unit of the HC dosing system. According to a preferred embodiment, the step of running said feed device may comprise running it at a power corresponding to less than 10% of that during ordinary operation. According to an embodiment, the innovative method may result in a total energy saving of 10-50% compared with cooling methods according to the state of the art.

The method may further comprise the step of running said feed device for a predetermined period of time after cessation of said exhaust flow. Any adequate period of time may be used such that cooling of the dosing unit can be switched off automatically when said period has passed after cessation of the exhaust flow.

The method may further comprise the step of running said feed device on the basis of a measured temperature of at least one portion of said HC dosing system. Any adequate temperature of said at least one portion of said HC dosing system may be employed such that cooling of the dosing unit can be switched off automatically when said temperature of the at least one portion of said HC dosing system is reached after cessation of the exhaust flow.

Running said feed device may entail catering for rewarming effects. Said predetermined period of time and said adequate temperature of the at least one portion of said HC dosing system may be predetermined by a computer model stored in a control unit of the vehicle on the basis of already known rewarming effects of the HC dosing system. The rewarming effects may be determined on the basis of predicted energy storage in the exhaust system.

The method may further comprise the step of continuously running said feed device at reduced power compared with ordinary operation. The feed device is run continuously at reduced operating power until it is found that cooling of the dosing unit can be ended, whereupon the feed device is switched off. According to an embodiment, said feed device is run continuously, i.e. without stopping, at a constant or variable reduced operating power compared with ordinary operation. To this end, a relatively simple algorithm is proposed to run said feed device. This version results in an embodiment which is easy to develop and also results in very good predictability as regards a future temperature pattern of the dosing unit.

The feed device may comprise a feed device adapted to supplying fuel to an injection system of an engine. This makes it possible for an existing feed device of the vehicle to be utilised for a new purpose. Alternatively, a separate feed device may be employed.

The method may comprise the step of powering said dosing unit by means of a compressed air source, in which case compressed air may be used to more finely divide fuel being dosed and/or to power the dosing of fuel in an advantageous way. Said compressed air may also be supplied to the exhaust duct after the exhaust flow has stopped.

The method comprises the step of cooling said fuel dosing unit by means of fuel after cessation of an exhaust flow.

The method is easy to implement in existing motor vehicles. Software pertaining to an HC dosing system for exhaust cleaning according to the invention may be installed in a control unit of the vehicle during the manufacture of the vehicle. A purchaser of the vehicle may thus have the possibility of selecting the function of the method as an option. Alternatively, software which comprises programme code for applying the innovative method for cooling a dosing unit pertaining to an HC dosing system for exhaust cleaning may be installed in a control unit of the vehicle on the occasion of upgrading at a service station, in which case the software may be loaded into a memory in the control unit. Implementing the innovative method is therefore cost-effective, particularly since the vehicle need not be provided with any further components or subsystems. Relevant hardware is currently already provided in the vehicle. The invention therefore represents a cost-effective solution to the problems indicated above.

Software comprising programme code for, during operation or after cessation of an exhaust flow, cooling a fuel dosing unit by means of fuel supplied to the dosing unit, and for running a feed device to supply said coolant fuel at reduced power compared with ordinary operation, according to an aspect of the invention, is easy to update or replace. Various parts of the software comprising programme code for applying the innovative method may also be replaced independently of one another. This modular configuration is advantageous from a maintenance perspective.

An aspect of the invention proposes an HC dosing system for exhaust cleaning which comprises a coolable dosing unit for fuel and a feed device for said fuel, which device comprises
- means for, during operation or after cessation of an exhaust flow, cooling said fuel dosing unit by means of fuel intended to be supplied to it and
- means for running said feed device to supply said coolant fuel at reduced power compared with ordinary operation. Said feed device is thus run at reduced power.

The HC dosing system may comprise means for running said feed device at least possible power, with substantially unchanged cooling power of said dosing unit, for as long as cooling continues.

Operation of said feed device may comprise running it at a power corresponding to 10-30% of that during ordinary operation.

The HC dosing system may further comprise means for running said feed device for a predetermined period of time after cessation of said exhaust flow.

The HC dosing system may further comprise means for running said feed device on the basis of a measured temperature of at least one portion of said HC dosing system.

Running said feed device may entail catering for rewarming effects.

The HC dosing system may further comprise means for continuously running said feed device at reduced power compared with ordinary operation.

The HC dosing system may comprise compressed air means adapted to powering said dosing unit.

The HC dosing system may comprise means for cooling said fuel dosing unit by means of fuel after cessation of an exhaust flow.

The above objects are also achieved with a motor vehicle which comprises the features of the HC dosing system. The vehicle may be a truck, bus or passenger car.

An aspect of the invention proposes any suitable platform which comprises an HC dosing system, e.g. a watercraft. The watercraft may be of any kind, e.g. a motorboat, a steamer, a ferry or a ship.

An aspect of the invention proposes a computer programme pertaining to HC dosing systems for exhaust cleaning which comprise a dosing unit for fuel and a feed device for said fuel, which programme contains programme code for causing an electronic control unit or another computer connected to the electronic control unit to perform steps according to any of claims 1-10.

An aspect of the invention proposes a computer programme pertaining to HC dosing systems for exhaust cleaning which comprise a dosing unit for fuel and a feed device for said fuel, which programme contains programme code stored on a computer-readable medium for causing an electronic control unit or another computer connected to the electronic control unit to perform steps according to any of claims 1-10.

An aspect of the invention proposes a computer programme product containing a programme code stored on a computer-readable medium for performing method steps according to any of claims 1-10 when said programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
Figure 1 illustrates schematically a vehicle according to an embodiment of the invention;
Figure 2 illustrates schematically a subsystem for the vehicle depicted in Figure 1, according to an embodiment of the invention;
Figure 3a is a schematic flowchart of a method according to an embodiment of the invention;
Figure 3b is a more detailed schematic flowchart of a method according to an embodiment of the invention; and
Figure 4 illustrates schematically a computer according to an embodiment of the invention.

### DETAILED DESCRIPTION OF THE DRAWINGS

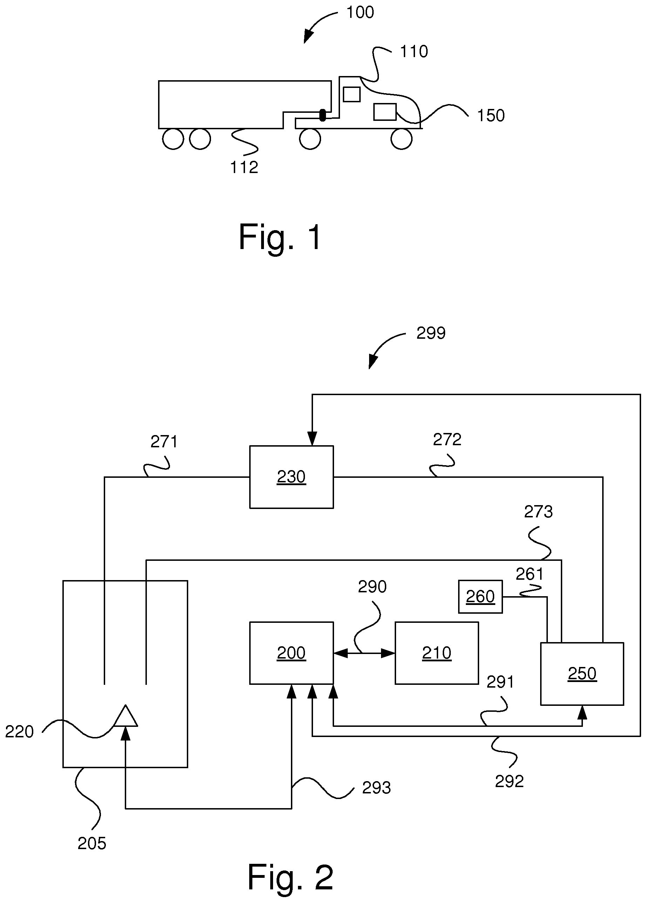

Figure 1 depicts a side view of a vehicle 100. The exemplified vehicle 100 comprises a tractor unit 110 with an engine 150 and a trailer 112. The vehicle may be a heavy vehicle, e.g. a truck or a bus. The vehicle may alternatively be a passenger car.

It should be noted that the invention is applicable to any suitable HC dosing system and is therefore not restricted to DPF systems of motor vehicles. The innovative method and the innovative HC dosing system according to an aspect of the invention are well suited to other platforms which have an HC dosing system than motor vehicles, e.g. watercraft. The watercraft may be of any kind, e.g. motorboats, steamers, ferries or ships.

The innovative method and the innovative HC dosing system according to an aspect of the invention are also well suited to for example, systems which comprise industrial engines and/or engine-powered industrial robots.

The innovative method and the innovative HC dosing system according to an aspect of the invention are also well suited to various kinds of power plants, e.g. an electric power plant comprising a diesel generator.

The innovative method and the innovative HC dosing system are well suited to any engine system which comprises an engine and an HC dosing system, e.g. on a locomotive or some other platform.

The innovative method and the innovative HC dosing system are well suited to any system which comprises a particle generator (e.g. a combustion engine) and an HC dosing system.

The innovative method and the innovative HC dosing system are well suited to any system which comprises any kind of system which generates exhaust gases with particles and a filter which stores particles, which particles are burnt during regeneration of said filter, particularly during active regeneration of said filter.

The term "link" refers herein to a communication link which may be a physical connection such as an opt-electronic communication line, or a non-physical connection such as a wireless connection, e.g. a radio link or microwave link.

The term "line" refers herein to a passage for holding and conveying a fluid, e.g. a fuel in liquid form. The line may be a pipe of any suitable size. The line may be made of any suitable material, e.g. plastic, rubber or metal.

The term "fuel" refers herein to an agent used for active regeneration of a particle filter of an HC dosing system. Said fuel according to a version is diesel fuel. Other kinds of hydrocarbon-based fuels may of course be used. Diesel fuel is herein cited as an example of a fuel, but one skilled in the art will appreciate that the innovative method and the innovative device are feasible for other types of fuels, subject to necessary adaptations, e.g. adaptations to adequate carbonisation temperatures for fuels adopted, in control algorithms for executing software code in accordance with the innovative method.

Although the term "HC dosing system" is used herein to denote a particle filter system, the invention is not restricted to use of a diesel particle filter. On the contrary, other types of particle filter may be used according to the invention. One skilled in the art will appreciate which kind of fuel is best suited to regenerating the particle filter adopted.

Figure 2 depicts a subsystem 299 of the vehicle 100. The subsystem 299 is situated in the tractor unit 110. The subsystem 299 may form part of an HC dosing system. The subsystem 299 consists according to this example of a container 205 adapted to containing a fuel. The container 205 is adapted to containing a suitable amount of fuel and to being replenishable as necessary. The container may accommodate, for example, 200 or 1500 litres of fuel.

A first line 271 is adapted to leading the fuel to a pump 230 from the container 205. The pump 230 may be any suitable pump. The pump 230 may be a diaphragm pump provided with at least one filter. The pump 230 is adapted to being driven by an electric motor. The pump 230 is adapted to drawing the fuel from the container 205 via the first line 271 and supplying it via a second line 272 to a dosing unit 250. The dosing unit 250 comprises an electrically controlled dosing valve by means of which a flow of fuel added to the exhaust system can be controlled. The pump 230 is adapted to pressurising the fuel in the second line 272. The dosing unit 250 is provided with a throttle unit against which said pressure of the fuel is built up in the subsystem 299.

The dosing unit 250 is adapted to supplying said fuel to an exhaust system (not depicted) of the vehicle 100. More specifically, the dosing unit 250 is adapted to supplying a suitable amount of fuel in a controlled way to an exhaust system of the vehicle 100. According to this version, a particle filter (not depicted), e.g. a DPF, is situated downstream of a location in the exhaust system where fuel supply is effected. The amount of fuel supplied in the exhaust system is intended to be used in a conventional way in the HC dosing system for active regeneration of the particle filter.

The dosing unit 250 is situated adjacent to, for example, an exhaust pipe which is adapted to leading exhaust gases from the combustion engine 150 of the vehicle 100 to said particle filter. The dosing unit 250 is situated in thermal contact with the exhaust system of the vehicle 100. This means that thermal energy stored in, for example, an exhaust pipe, silencer, particle filter and SCR catalyst can thus be led to the dosing unit 250.

The dosing unit 250 is provided with an electronic control card which is adapted to handling communication with a control unit 200. The dosing unit 250 comprises also plastic and/or rubber components which might melt or be otherwise adversely affected as a result of too high temperatures.

The dosing unit 250 is sensitive to temperatures above a certain value, e.g. 120 degrees Celsius. As for example the exhaust pipe, the silencer and the particle filter of the vehicle 100 exceed this temperature value, there is risk that the dosing unit 250 might become overheated during or after operation of the vehicle if not provided with cooling.

A third line 273 runs between the dosing unit 250 and the container 205. The third line 273 is adapted to leading back to the container 205 a certain amount of the fuel fed to the dosing valve 250. This configuration achieves with advantage cooling of the dosing unit 250. The dosing unit 250 is thus cooled by a flow of the fuel when it is pumped through the dosing unit 250 from the pump 230 to the container 205.

The first control unit 200 is arranged for communication with a temperature sensor 220 via a link 293. The temperature sensor 220 is adapted to detecting a prevailing temperature of the fuel where the sensor is fitted. According to this version, the temperature sensor 220 is situated in the container 205. The temperature sensor 220 is adapted to continuously sending signals to the first control unit 200 which contain information about a prevailing temperature of the fuel.

According to an alternative, the temperature sensor 220 is situated adjacent to the dosing unit 250 in order to detect a prevailing temperature there. According to another version, the temperature sensor 220 is situated adjacent to the particle filter of the HC dosing system in order to detect a prevailing temperature there. Any desired number of temperature sensors may be provided in the subsystem 299 to detect a prevailing temperature adjacent thereto. The temperature sensor/sensors 220 is/are adapted to detecting at a suitable location within the subsystem 299 a prevailing temperature which may serve as a basis for controlling operation of the pump 230 in order to cool the dosing unit by means of said flow of fuel.

The first control unit 200 is arranged for communication with the pump 230 via a link 292. The first control unit 200 is adapted to controlling operation of the pump 230 in order for example to regulate fuel flows within the subsystem 299.

The first control unit 200 is arranged for communication with the dosing unit 250 via a link 291. The first control unit 200 is adapted to controlling operation of the dosing unit 250 in order for example to regulate fuel supply to the exhaust system of the vehicle 100. The first control unit 200 is adapted to controlling operation of the dosing unit 250 in order for example to regulate fuel return supply to the container 205.

The first control unit 200 is adapted, according to a version, to using the signals received which contain a prevailing temperature of the fuel in the region of the temperature sensor 220 and/or a prevailing temperature of any desired component of the HC dosing system, e.g. the dosing unit, or the subsystem 299 as a basis for controlling the pump 230 in accordance with an aspect of the innovative method. In particular, the first control unit 200 is adapted, according to a version, to using the signals received which contain a prevailing temperature of the fuel in the region of the temperature sensor 220 and/or a prevailing temperature of any desired component of the HC dosing system or the subsystem 299 as a basis for controlling operation of the pump 230 intermittently and at reduced power compared with ordinary operation, in accordance with an aspect of the innovative method.

A second control unit 210 is arranged for communication with the first control unit 200 via a link 290. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, particularly software for applying the innovative method. The second control unit 210 may alternatively be arranged for communication with the first control unit 200 via an internal network in the vehicle. The second control unit 210 may be adapted to performing substantially similar functions to those of the first control unit 200, e.g. using the signals received which contain a prevailing temperature of the fuel in the region of the temperature sensor 220 and/or a prevailing temperature of any desired component of the HC dosing system or the subsystem 299 as a basis for controlling operation of the pump 230 intermittently and at reduced power compared with ordinary operation.

According to the embodiment schematically illustrated in Figure 2, the first control unit 200 is adapted to controlling operation of the pump 230 at reduced power compared with ordinary operation in such a way that any amount of electrical energy which may be needed for cooling the dosing unit 250 to at least one critical temperature as regards safety is smaller than in the state of the art.

According to this version, a compressed air source 260 is provided to supply compressed air to the dosing unit 250 via a line 261. The dosing unit 250 is adapted to using said compressed air supply to divide more finely the fuel being dosed. The compressed air may also be used for at least partly causing the dosing unit to dose said fuel into the exhaust duct. The compressed air may also be used to blow out of, for example, the dosing unit 250 any fuel which may be present therein. This may be done during operation of the engine 150 or after the engine 150 has been switched off.

According to a version, the container 205 may be the vehicle's fuel tank, in which case portions of the vehicle's existing fuel system are utilised according to the present invention. According to another example, the container may be a separate container, i.e. not the same container as the vehicle's fuel tank.

According to a version, the dosing unit 250 is situated immediately adjacent to an exhaust duct of the HC dosing system. According to another example, the dosing unit 250 is provided with a passive nozzle running through said exhaust duct to dose said fuel directly into the exhaust duct.

According to a version, said pump 230 is the same pump as normally generates fuel pressure for an injection system of the engine 150. According to another example, said pump 230 is a separate pump, i.e. not the same pump as normally generates the fuel pressure for the injection system.

According to an example, a precatalyst and/or oxidation catalyst are/is fitted in series with, and upstream of, the particle filter.

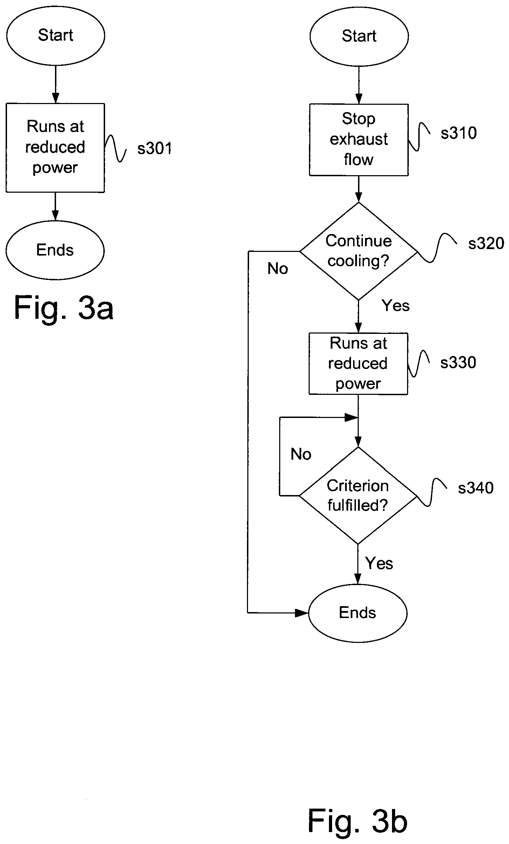

Figure 3a is a schematic flowchart of a method for cooling a dosing unit pertaining to HC dosing systems for exhaust cleaning which comprise a dosing unit for fuel and a feed device for said fuel, according to an embodiment of the invention. The method comprises a first step s301. Method step s301 comprises the steps of cooling said fuel dosing unit by means of fuel supplied to it, and of running said feed device to supply said fuel at reduced power compared with ordinary operation. The method ends after step s301.

Figure 3b is a schematic flowchart of a method for cooling a dosing unit pertaining to HC dosing systems for exhaust cleaning which comprise a dosing unit for fuel and a feed device for said fuel, according to an embodiment of the invention.

The method comprises a first step s310. Method step s310 comprises the step of shutting off an exhaust flow from a combustion engine of the vehicle 100. At this stage, the dosing unit 250 is cooled in an ordinary way, i.e. at an operating power of the pump 230 which is needed to maintain the same cooling flow for the dosing unit as during ordinary operation. Shutting off the exhaust flow is effected by switching off the engine of the vehicle 100. According to a version, step s310 is not performed, i.e. the innovative method is applied during operation of the engine 150. If the exhaust flow is shut off, the compressed air source 260 may continuously or intermittently dose air into the exhaust duct to assist combustion of the fuel dosed during active regeneration of the particle filter. Step s310 is followed by a step s320.

Method step s320 comprises the step of evaluating whether there is a continuing need to cool the dosing unit by means of a flow of the fuel in the HC dosing system. The step of deciding whether there is a need to continue said cooling may be based on various parameters. According to an example, deciding whether there is a continuing need for cooling is based on the signals from the temperature sensor 220 which contain information about a prevailing temperature of at least one component of the HC dosing system or the subsystem 299 of the vehicle 100. If there is no continuing need for cooling, the method ends. If there is a continuing need for cooling, a subsequent step s330 is performed.

Method step s330 comprises the step of influencing the operation of the pump 230 in such a way that it is run at a reduced power compared with ordinary operation. According to an example, the pump 230 is run at a power which according to an example corresponds to about 10% of that used for maintaining a cooling flow for the dosing unit 250 during ordinary operation. According to an example, the pump 230 is run at a power corresponding to less than 10% of that employed during ordinary operation. According to another example, the pump 230 is run at a power corresponding to 10-30% of that employed during ordinary operation. According to an example the pump 230 is run continuously at a reduced power compared with that employed during ordinary operation. Step s330 is followed by a step s340.

Method step s340 comprises the step of deciding whether a predetermined criterion is fulfilled. The predetermined criterion may be any suitable criterion. Said criterion may be related to a predetermined period of time after cessation of said exhaust flow. Said criterion may be related to a measured temperature of at least one portion of said HC dosing system. Said criterion may be related to rewarming effects of at least one portion of said HC dosing system. The predetermined criterion may thus be fulfilled if a certain time has passed since operating the feed device at reduced power began. If said time has passed, it may be assumed that the dosing unit 250 has reached a desired temperature at which it needs no further cooling. If a predetermined temperature of at least one portion of the HC dosing system is reached, it may be assumed that the dosing unit 250 has reached a desired temperature at which it needs no further cooling. If it is decided at step s340 that the predetermined criterion is fulfilled, the method ends. If it is decided at step s340 that the predetermined criterion is not fulfilled, operation of the pump 230 at reduced power compared with ordinary operation continues, and step s340 is performed again. The method ends after step s340.

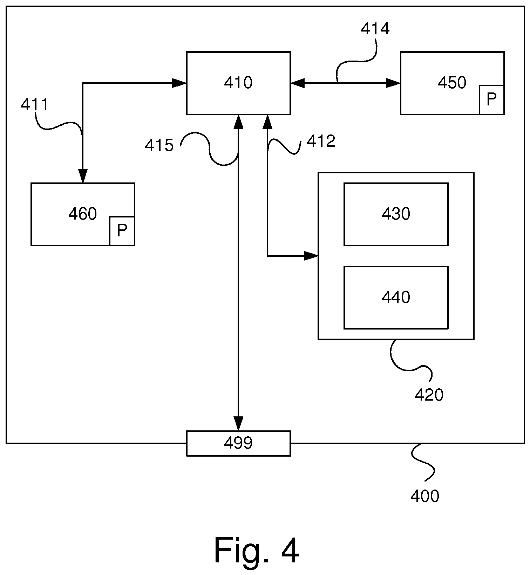

Figure 4 is a diagram of a version of a device 400. The control units 200 and 210 described with reference to Figure 2 may in a version comprise the device 400. The device 400 comprises a non-volatile memory 420, a data processing unit 410 and a read/write memory 450. The non-volatile memory 420 has a first memory element 430 in which a computer programme, e.g. an operating system, is stored for controlling the function of the device 400. The device 400 further comprises a bus controller, a serial communication port, I/O means, an A/D converter, a time and date input and transfer unit, an event counter and an interruption controller (not depicted). The non-volatile memory 420 has also a second memory element 440.

A proposed computer programme P comprises routines for cooling a fuel dosing unit by means of fuel supplied to it, and for running a feed device to supply said coolant fuel at reduced power compared with ordinary operation, according to the innovative method. The programme P may be stored in an executable form or in a compressed form in a memory 460 and/or in a read/write memory 450.

Where the data processing unit 410 is described as performing a certain function, it means that the data processing unit 410 effects a certain part of the programme stored in the memory 460, or a certain part of the programme stored in the read/write memory 450.

The data processing device 410 can communicate with a data port 499 via a data bus 415. The non-volatile memory 420 is intended for communication with the data processing unit 410 via a data bus 412. The separate memory 460 is intended to communicate with the data processing unit 410 via a data bus 411. The read/write memory 450 is adapted to communicating with the data processing unit 410 via a data bus 414. The data port 499 may for example have the links 260, 290, 291, 292 and 293 connected to it (see Figure 2).

When data are received on the data port 499, they are stored temporarily in the second memory element 440. When input data have been stored temporarily, the data processing unit 410 is prepared to effect code execution as described above. According to a version, signals received on the data port 499 contain information about a prevailing temperature of at least one portion of the HC dosing system. The signals received on the data port 499 may be used by the device 400 to run the pump 230 according to an aspect of the invention.

Parts of the methods herein described may be effected by the device 400 by means of the data processing unit 410 which runs the programme stored in the memory 460 or the read/write memory 450. When the device 400 runs the programme, methods herein described are executed.

An aspect of the invention proposes a computer programme pertaining to HC dosing systems for exhaust cleaning which comprise a dosing unit for fuel and a feed device for said fuel, which programme contains programme code stored on a computer-readable medium for causing an electronic control unit or another computer connected to the electronic control unit to perform the steps of cooling said fuel dosing unit by means of fuel supplied to it, and of running said feed device to supply said coolant fuel at reduced power compared with ordinary operation.

The foregoing description of the preferred embodiments of the present invention is provided for illustrative and descriptive purposes. It is not intended to be exhaustive or to restrict the invention to the variants described. Many modifications and variants will obviously be apparent to one skilled in the art. The embodiments have been chosen and described in order best to explain the principles of the invention and its practical applications and hence make it possible for specialists to understand the invention for various embodiments and with the various modifications appropriate to the intended use.

## Claims

1. A method for cooling a dosing unit pertaining to HC dosing systems for exhaust cleaning which comprise a dosing unit (250) for fuel and a feed device (230) for said fuel, whereby said feed device (230) is arranged to pump reducing agent from a container (205) via a first line (271), and via a second line (272) supply said fuel to said dosing unit (250), and where a third line (273) is arranged between said dosing unit (250) and said container (205), whereby said third line is adapted to leading back a certain amount of the fuel fed to the dosing unit (250) to said container (205), comprising the step of
- cooling said fuel dosing unit (250) by means of said fuel supplied to said dosing unit (250), whereby, at ordinary operation a return flow from said dosing unit (50) to said container (205) is essentially constant, **characterised by** the step of
- after cessation of an exhaust flow, running said feed device (230) to supply said coolant fuel to said dosing unit (250) at reduced power, whereby a lower pressure towards said reducing agent dosing unit (250) compared with ordinary operation is achieved.

2. A method according to claim 1, comprising the step of
- running said feed device (230) at least possible power, with substantially unchanged cooling power of said dosing unit (250), for as long as cooling continues.

3. A method according to claim 1 or 2, in which the step of running said feed device (230) comprises running it at a power corresponding to 10-30% of that during ordinary operation.

4. A method according to any one of the foregoing claims, further comprising the step of
- running said feed device (230) for a predetermined period of time.

5. A method according to any one of the foregoing claims, further comprising the step of
- running said feed device (230) on the basis of a measured temperature of at least one portion of said HC dosing system.

6. A method according to any one of the foregoing claims, in which running said feed device (230) entails catering for rewarming effects.

7. A method according to any one of the foregoing claims, in which the feed device (230) comprises a feed device adapted to supplying fuel to an injection system of the engine (150) or is a separate feed device (230).

8. A method according to any one of the foregoing claims, comprising the step of powering said dosing unit (250) by means of a compressed air source (260).

9. An HC dosing system for exhaust cleaning which comprises a coolable dosing unit (250) for fuel and a feed device (230) for said fuel, whereby said feed device (230) is arranged to pump fuel from a container (205) via a first line (271), and via a second line (272) supply said reducing agent to said dosing unit (250), and where a third line (273) is arranged between said dosing unit (250) and said container (205), whereby said third line is adapted to leading back a certain amount of the fuel fed to the dosing unit (250) to said container (205), whereby said dosing unit (250) is configured to be cooled by said fuel intended to be supplied to said dosing unit, whereby at ordinary operation a return flow from said dosing unit (250) to said container (205) is essentially constant,
**characterised by**
- means (200; 210; 400) for, after cessation of an exhaust flow, running said feed device (230) to supply said coolant fuel at reduced power compared with ordinary operation, whereby a lower pressure towards said reducing agent dosing unit (250) compared with ordinary operation is achieved.

10. An HC dosing system according to claim 9, comprising
- means (200; 210; 400) for after cessation of an exhaust flow, running said feed device (230) at least possible power, with substantially unchanged cooling power of said dosing unit (250), for as so long as cooling continues.

11. An HC dosing system according to claim 9 or 10, comprising means (200; 210; 400) for running said feed device (230) at a power corresponding to 10-30% of that during ordinary operation.

12. An HC dosing system according to any one of claims 9-11, further comprising
- means (200; 210; 400) for running said feed device (230) for a predetermined period of time after cessation of said exhaust flow.

13. An HC dosing system according to any one of claims 9-11, further comprising
- means (200; 210; 400) for running said feed device (230) on the basis of a measured temperature of at least one portion of said HC dosing system.

14. An HC dosing system according to any one of claims 9-13, in which running said feed device (230) entails catering for rewarming effects.

15. An HC dosing system according to any one of claims 9-14, in which the feed device (230) comprises a feed device adapted to supplying fuel to an injection system of the engine (150) or is a separate feed device (230).

16. An HC dosing system according to any one of claims 9-15, comprising compressed air means (260) adapted to powering said dosing unit (250).

17. A motor vehicle (100; 110) comprising an HC dosing system according to any one of claims 9-16.

18. A motor vehicle (100; 110) according to claim 17, which vehicle is any from among truck, bus or passenger car.

19. A computer programme (P) pertaining to HC dosing systems for exhaust cleaning which comprise a dosing unit (250) for fuel and a feed device (230) for said fuel, which programme (P) contains programme code for causing an electronic control unit (200; 400) or another computer (210; 400) connected to the electronic control unit (200; 400) to perform steps according to any of claims 1-8.

20. A computer programme product containing a programme code stored on a computer-readable medium for performing method steps according to any of claims 1-8 when said programme code is run on an electronic control unit (200; 400) or another computer (210; 400) connected said electronic control unit (200; 400)

## Patentansprüche

1. Verfahren zur Kühlung einer Dosiereinheit eines HC-Dosiersystems zur Abgasreinigung, das eine Dosiereinheit (250) für Kraftstoff und eine Zufuhrvorrichtung (230) für den Kraftstoff aufweist, wobei die Zufuhrvorrichtung (230) so ausgeführt ist, dass sie ein Reduktionsmittel aus einem Behälter (205) über eine erste Leitung (271) und über eine zweite Leitung (272) pumpt, den Kraftstoff der Dosiereinheit (250) zuführt und eine dritte Leitung (273) zwischen der Dosiereinheit (250) und dem Behälter (205) angeordnet ist, wobei die dritte Leitung dazu eingerichtet ist, eine bestimmte Menge des der Dosiereinheit (250) zugeführten Kraftstoffs zum Behälter (205) zurückzuführen, das den Schritt aufweist:
- Kühlen der Kraftstoff-Dosiereinheit (250) mittels des der Dosiereinheit (250) zugeführten Kraftstoffs, wobei der Rücklauf von der Dosiereinheit (250) zum Behälter (205) im Normalbetrieb im Wesentlichen konstant ist,
**gekennzeichnet durch** den Schritt
- nach Beendigung eines Abgasstroms Betreiben der Zufuhrvorrichtung (230), um den Kühl-Kraftstoff mit verringerter Leistung an die Dosiereinheit (250) zu liefern, wodurch einer niedrigerer Druck im Vergleich zum Normalbetrieb auf die Reduktionsmittel-Dosiereinheit (250) erreicht wird.

2. Verfahren nach Anspruch 1, das den Schritt aufweist:
- Betreiben der Zufuhrvorrichtung (230) bei der niedrigstmöglichen Leistung mit im Wesentlichen unveränderter Kühlleistung der Dosiereinheit (250) so lang die Kühlung andauert.

3. Verfahren nach Anspruch 1 oder 2, bei dem der Schritt des Betreibens der Zufuhrvorrichtung (230) das Betreiben bei einer Leistung entsprechend 10 bis 30% der Leistung im Normalbetrieb entspricht.

4. Verfahren nach einem der vorigen Ansprüche, das ferner den Schritt aufweist
- Betreiben der Zufuhrvorrichtung (230) über eine vorgegebene Zeitspanne.

5. Verfahren nach einem der vorigen Ansprüche, das den Schritt aufweist
- Betreiben der Zufuhrvorrichtung (230) auf Basis einer gemessenen Temperatur von mindestens einem Abschnitt des HC-Dosiersystems.

6. Verfahren nach einem der vorigen Ansprüche, bei dem das Betreiben der Zufuhrvorrichtung (230) Aufwärmeffekte mit sich bringt.

7. Verfahren nach einem der vorigen Ansprüche, bei dem die Zufuhrvorrichtung (230) eine Zufuhrvorrichtung aufweist, die zur Zufuhr von Kraftstoff an ein Einspritzsystem des Verbrennungsmotors (150) eingerichtet ist, oder die eine getrennte Zufuhrvorrichtung (230) ist.

8. Verfahren nach einem der vorigen Ansprüche, das den Schritt des Aktivierens der Dosiereinheit (250) mittels einer Druckluftquelle (260) aufweist.

9. HC-Dosiersystem zur Abgasreinigung, das eine kühlbare Dosiereinheit (250) für Kraftstoff und eine Zufuhrvorrichtung (230) für den Kraftstoff aufweist, wobei die Zufuhrvorrichtung (230) so ausgeführt ist, dass sie Kraftstoff aus einem Behälter (205) über eine erste Leitung (271) und über eine zweite Leitung (272) pumpt, das Reduktionsmittel der Dosiereinheit (250) zuführt und eine dritte Leitung (273) zwischen der Dosiereinheit (250) und dem Behälter (205) angeordnet ist, wobei die dritte Leitung dazu eingerichtet ist, eine bestimmte Menge des der Dosiereinheit (250) zugeführten Kraftstoffs zum Behälter (205) zurückzuführen, wobei die Dosiereinheit (250) zur Kühlung durch den Kraftstoff konfiguriert ist, der der Dosiereinheit zugeführt werden soll, wobei der Rücklauf von der Dosiereinheit (250) zum Behälter (205) im Normalbetrieb im Wesentlichen konstant ist,
**gekennzeichnet durch**
- Mittel (200; 210; 400), um nach Beendigung eines Abgasstroms die Zufuhrvorrichtung (230) zu betreiben, um den Kühl-Kraftstoff mit verringerter Leistung im Vergleich zum Normalbetrieb zuzuführen, wodurch ein geringerer Druck auf die Reduktionsmittel-Dosiereinheit (250) im Vergleich zum Normalbetrieb erreicht wird.

10. HC-Dosiersystem nach Anspruch 9, aufweisend:
- Mittel (200; 210; 400), um nach Beendigung eines Abgasstroms die Zufuhrvorrichtung (230), bei der niedrigstmöglichen Leistung mit im Wesentlichen unveränderter Kühlleistung der Dosiereinheit (250) zu betreiben, so lang die Kühlung andauert.

11. HC-Dosiersystem nach Anspruch 9 oder 10, das Mittel (200; 210; 400) zum Betreiben der Zufuhrvorrichtung (230) bei einer Leistung entsprechend 10 bis 30% der Leistung im Normalbetrieb.

12. HC-Dosiersystem nach einem der Ansprüche 9 bis 11, ferner aufweisend:
- Mittel (200; 210; 400) zum Betreiben der Zufuhrvorrichtung (230) über eine vorgegebene Zeitspanne nach Beendigung des Abgasstroms.

13. HC-Dosiersystem nach einem der Ansprüche 9 bis 11, ferner aufweisend:
- Mittel (200; 210; 400) zum Betreiben der Zufuhrvorrichtung (230) auf Basis einer gemessenen Temperatur mindestens eines Abschnitts des HC-Dosiersystems.

14. HC-Dosiersystem nach einem der Ansprüche 9 bis 13, bei dem das Betreiben der Zufuhrvorrichtung (230) Aufwärmeffekte mit sich bringt.

15. HC-Dosiersystem nach einem der Ansprüche 9 bis 14, bei dem die Zufuhrvorrichtung (230) eine Zufuhrvorrichtung aufweist, die zur Zufuhr von Kraftstoff an ein Einspritzsystem des Verbrennungsmotors (150) eingerichtet ist, oder die eine getrennte Zufuhrvorrichtung (230) ist.

16. HC-Dosiersystem nach einem der Ansprüche 9 bis 15, das ein Druckluftmittel aufweist, das zum Aktivieren der Dosiereinheit (250) eingerichtet ist.

17. Kraftfahrzeug (100; 110), das ein HC-Dosiersystem nach einem der Ansprüche 9 bis 16 aufweist.

18. Kraftfahrzeug (100; 110) nach Anspruch 17, wobei das Kraftfahrzeug entweder ein Lastkraftwagen, ein Bus oder ein Personenkraftwagen ist.

19. Computerprogramm (P) für ein HC-Dosiersystem zur Abgasreinigung, das eine Dosiereinheit (250) für Kraftstoff und eine Zufuhrvorrichtung (230) für den Kraftstoff aufweist, wobei das Programm (P) einen Programmcode enthält, um eine elektronische Steuereinheit (200; 400) oder einen anderen mit der elektronischen Steuereinheit (200; 400) verbundenen Computer (210; 400) zu veranlassen, die Schritte nach einem der Ansprüche 1 bis 8 auszuführen.

20. Computerprogrammprodukt mit einem Programmcode, der zur Ausführung der Schritte nach einem der Ansprüche 1 bis 8 auf einem computerlesbaren Medium gespeichert ist, wenn der Programmcode auf einer elektronischen Steuereinheit (200; 400) oder einem anderen mit der elektronischen Steuereinheit (200; 400) verbundenen Computer (210; 400) ausgeführt wird.

## Revendications

1. Procédé de refroidissement d'une unité de dosage relative à des systèmes de dosage d'hydrocarbures (HC) pour la purification de gaz d'échappement qui comprennent une unité de dosage (250) pour carburant et un dispositif d'alimentation (230) pour ledit carburant, ledit dispositif d'alimentation (230) étant agencé pour pomper un agent réducteur à partir d'un conteneur (205) via une première ligne (271), et via une deuxième ligne (272), délivrer ledit carburant dans ladite unité de dosage (250), et une troisième ligne (273) est agencée entre ladite unité de dosage (250) et ledit conteneur (205), de sorte que ladite troisième ligne est adaptée pour renvoyer dans ledit conteneur (205) une certaine quantité de carburant alimenté dans l'unité de dosage (250), comprenant l'étape consistant à
- refroidir ladite unité de dosage de carburant (250) au moyen dudit carburant délivré dans ladite unité de dosage (250), de sorte que, en fonctionnement ordinaire, un flux de retour depuis ladite unité de dosage (50) vers ledit conteneur (205) est essentiellement constant,
**caractérisé par** l'étape consistant à
- après la cessation d'un flux d'échappement, actionner ledit dispositif d'alimentation (230) pour délivrer ledit carburant de refroidissement dans ladite unité de dosage (250) à puissance réduite, de manière à obtenir une pression inférieure en direction de ladite unité de dosage d'agent réducteur (250) par comparaison à un fonctionnement ordinaire.

2. Procédé selon la revendication 1, comprenant l'étape consistant à
- actionner ledit dispositif d'alimentation (230) à une puissance la plus faible possible, avec une puissance de refroidissement sensiblement inchangée de ladite unité de dosage (250), aussi longtemps que le refroidissement continue.

3. Procédé selon la revendication 1 ou 2, dans lequel l'étape de d'actionnement dudit dispositif d'alimentation (230) comprend son actionnement à une puissance correspondant entre 10 et 30 % de celle pendant un fonctionnement ordinaire.

4. Procédé selon l'une quelconque des revendications précédentes, comprenant en outre l'étape consistant à
- actionner ledit dispositif d'alimentation (230) pendant une période de temps prédéterminée.

5. Procédé selon l'une quelconque des revendications précédentes, comprenant en outre l'étape consistant à
- actionner ledit dispositif d'alimentation (230) sur la base d'une température mesurée d'au moins une partie dudit système de dosage HC.

6. Procédé selon l'une quelconque des revendications précédentes, dans lequel l'actionnement dudit dispositif d'alimentation (230) implique la restauration d'effets de réchauffement.

7. Procédé selon l'une quelconque des revendications précédentes, dans lequel le dispositif d'alimentation (230) comprend un dispositif d'alimentation adapté pour délivrer du carburant à un système d'injection du moteur (150) ou est un dispositif d'alimentation séparé (230).

8. Procédé selon l'une quelconque des revendications précédentes, comprenant l'étape d'alimentation de ladite unité de dosage (250) au moyen d'une source à air comprimé (260).

9. Système de dosage HC pour la purification de gaz d'échappement qui comprend une unité de dosage refroidissable (250) pour carburant et un dispositif d'alimentation (230) pour ledit carburant, de sorte que ledit dispositif d'alimentation (230) est agencé pour pomper du carburant depuis un conteneur (205) via une première ligne (271), et via une deuxième ligne (272), délivrer ledit agent réducteur dans ladite unité de dosage (250), et dans lequel une troisième ligne (273) est agencée entre ladite unité de dosage (250) et ledit conteneur (205), de sorte que ladite troisième ligne est adaptée pour renvoyer dans ledit conteneur (205) une certaine quantité de carburant alimenté dans l'unité de dosage (250), de sorte que ladite unité de dosage (250) est configurée pour être refroidie par ledit carburant destiné à être délivré dans ladite unité de dosage, de sorte que, en fonctionnement ordinaire, un flux de retour depuis ladite unité de dosage (250) vers ledit conteneur (205) est essentiellement constant,
**caractérisé par**
- des moyens (200 ; 210 ; 400) pour, après la cessation d'un flux de gaz d'échappement, actionner ledit dispositif d'alimentation (230) pour délivrer ledit carburant de refroidissement à puissance réduite par comparaison à un fonctionnement ordinaire, de manière à obtenir une pression inférieure en direction de ladite l'unité de dosage d'agent réducteur (250) par comparaison à un fonctionnement ordinaire.

10. Système de dosage HC selon la revendication 9, comprenant
- des moyens (200 ; 210 ; 400) pour, après la cessation d'un flux de gaz d'échappement, actionner ledit dispositif d'alimentation (230) à une puissance la plus faible possible, avec une puissance de refroidissement sensiblement inchangée de ladite unité de dosage (250), aussi longtemps que le refroidissement continue.

11. Système de dosage HC selon la revendication 9 ou 10, comprenant des moyens (200 ; 210 ; 400) pour actionner ledit dispositif d'alimentation (230) à une puissance correspondant entre 10 et 30% de celle pendant un fonctionnement ordinaire.

12. Système de dosage HC selon l'une quelconque des revendications 9 à 11, comprenant en outre
- des moyens (200 ; 210 ; 400) pour actionner ledit dispositif d'alimentation (230) pendant une période de temps prédéterminée après la cessation dudit flux de gaz d'échappement.

13. Système de dosage HC selon l'une quelconque des revendications 9 à 11, comprenant en outre
- des moyens (200 ; 210 ; 400) pour actionner ledit dispositif d'alimentation (230) sur la base d'une température mesurée d'au moins une partie dudit système de dosage HC.

14. Système de dosage HC selon l'une quelconque des revendications 9 à 13, dans lequel l'actionnement dudit dispositif d'alimentation (230) implique la restauration d'effets de réchauffement.

15. Système de dosage HC selon l'une quelconque des revendications 9 à 14, dans lequel le dispositif d'alimentation (230) comprend un dispositif d'alimentation adapté pour délivrer du carburant dans un système d'injection du moteur (150) ou est un dispositif d'alimentation séparé (230).

16. Système de dosage HC selon l'une quelconque des revendications 9 à 15, comprenant des moyens à air comprimé (260) adaptés pour alimenter ladite unité de dosage (250).

17. Véhicule à moteur (100; 110) comprenant un système de dosage HC selon l'une quelconque des revendications 9 à 16.

18. Véhicule à moteur (100 ; 110) selon la revendication 17, lequel véhicule est l'un quelconque parmi un camion, un bus ou une voiture de tourisme.

19. Programme informatique (P) relatif à des systèmes de dosage HC pour la purification de gaz d'échappement qui comprennent une unité de dosage (250) pour carburant et un dispositif d'alimentation (230) pour ledit carburant, lequel programme (P) contient un code de programme pour amener une unité de commande électronique (200 ; 400) ou un autre ordinateur (210 ; 400) connecté à l'unité de commande électronique (200 ; 400) à effectuer des étapes selon l'une quelconque des revendications 1 à 8.

20. Produit de programme informatique contenant un code de programme mémorisé sur un support lisible par ordinateur pour effectuer des étapes de procédé selon l'une quelconque des revendications 1 à 8 lorsque ledit code de programme est exécuté sur une unité de commande électronique (200 ; 400) ou un autre ordinateur (210 ; 400) connecté à ladite unité de commande électronique (200 ; 400).
